# EUROPÄISCHE PATENTSCHRIFT

(11) **EP 1 125 067 B1**
(45) Veröffentlichungstag und Bekanntmachung des Hinweises auf die Patenterteilung: **09.06.2004**
(21) Anmeldenummer: 99971070.0
(22) Anmeldetag: 27.10.1999
(51) Int. Cl.: F16D 66/02, B60T 13/74

(54) **VERFAHREN UND VORRICHTUNG ZUR ÜBERWACHUNG DER BEWEGUNG EINES AKTUATORS**
METHOD AND DEVICE FOR MONITORING THE MOVEMENTS OF AN ACTUATOR
PROCEDE ET DISPOSITIF POUR LA SURVEILLANCE DU MOUVEMENT D'UN ACTIONNEUR

(30) Priorität: 27.10.1998 DE 19849413; 08.03.1999 DE 19910048
(43) Veröffentlichungstag der Anmeldung: 22.08.2001
(73) Patentinhaber: Continental Teves AG & Co. OHG, 60488 Frankfurt am Main (DE)
(72) Erfinder: BÖHM, Jürgen, D-65558 Oberneisen (DE)
(86) Internationale Anmeldenummer: PCT/EP1999/008125
(87) Internationale Veröffentlichungsnummer: WO 2000/025036

(56) Entgegenhaltungen:
- EP-A- 0 849 866
- DE-A- 3 444 301
- DE-A- 19 536 694
- DE-A- 19 536 695
- DE-C- 19 625 400
- DE-C- 19 629 936
- US-A- 4 995 483

## Beschreibung

Die Erfindung betrifft ein Verfahren zur Überwachung der Bewegung eines Aktuators einer Fahrzeugbremse gemäß dem Oberbegriff des Patentanspruchs 1.

Ein derartiges Verfahren ist aus der DE 196 25 400 C1 bekannt. Bei der Durchführung des vorbekannten Verfahrens erfolgt eine Belagverschleißerfassung mittels mehrerer Sensoren, deren Verwendung jedoch mit erheblichem Kostenaufwand verbunden ist.

Die DE 197 14 046 A1 zeigt eine elektromechanisch betätigte Radbremse, bei der ein Elektromotor eine sich drehende Spindel antreibt. Über eine dadurch verursachte translatorische Bewegung der Spindel wird die Bremse durch eine Verschiebung der Bremsbeläge gegen die Bremsscheibe oder Bremstrommel betätigt. Die Spindel kann sich dabei nur innerhalb eines festen, mechanischen Bereiches bewegen.

Dieser Bereich ergibt sich aufgrund des konstruktiven Aufbaus der Bremsenmechanik, der normalerweise so bemessen ist, dass die Bremsbeläge innerhalb eines Verstellbereiches entsprechend dem Belagverschleiß in ihrer Ausgangsposition (Löseposition) eingestellt bzw. nachgestellt werden können. Dabei erfolgt die Einstellung derart, dass die Bremsbeläge einen gegebenen Abstand, d.h. ein Lüftspiel zur Bremsscheibe oder -trommel haben. In der anderen Richtung ist der mechanische Bereich so bemessen, dass ein Belagwechsel bei Bedarf problemlos möglich ist, d.h., dass z.B. die Spindel in Richtung Lösen der Bremse weit genug zurückgefahren werden kann.

Um zu verhindern, dass z.B. die Spindel während des Betriebes an den mechanischen Anschlag führt und um andererseits die Notwendigkeit für einen Belagwechsel rechtzeitig zu erkennen, kann z.B. die relative Antriebs- bzw. Spindelbewegung überwacht werden.

Aufgabe der Erfindung ist es, ein Verfahren und eine Vorrichtung zur Überwachung der Bewegung eines Aktuators einer Fahrzeugbremse ohne aufwendige Sensorik anzugeben, mit denen eine Überwachung in Bezug auf eine absolute Fahrzeugposition möglich ist.

Diese Aufgabe wird mit den Merkmalen der unabhängigen Ansprüche gelöst. Abhängige Ansprüche sind auf bevorzugte Ausführungsformen der Erfindung gerichtet.

Zur Überwachung der Spindelbewegung können auf der Antriebsmotorwelle gleichmäßig verteilt Magnete angebracht werden, die bei Passieren eines entsprechend angebrachten Hall-Sensors Impulse erzeugen. Diese Impulse werden dazu verwendet, z.B. den Lagewinkel der Motorwelle relativ zu einer zuvor bestimmten Bezugsposition zu ermitteln. Daraus lässt sich dann wiederum über das Übersetzungsverhältnis zwischen Spindelrotation und -translation die translatorische Bewegung der Spindel ermitteln. Die Bezugsposition für dieses relativ und inkrementell messende Lagemesssystem wird durch eine Nullpunktinitialisierung festgelegt und Änderungen des Lagewinkels gegenüber dieser Bezugsposition durch Zählen der vom Lagemesssystem erzeugten Impulse betrachtet. Als Bezugsposition dient dabei üblicherweise die Position der Antriebswelle oder der Spindel, bei der die Bremsbeläge gerade (d.h. kraftfrei) an der Bremsscheibe oder Bremstrommel anliegen. Durch geeignetes Anbringen eines zweiten Hall-Sensors kann zusätzlich die Bewegungsrichtung des Antriebs erfasst werden. Für die Zählrichtung gilt dann im allgemeinen, da□ eine mathematisch positive Winkeländerung eine Bewegung der Antriebswelle in Richtung Zuspannen und eine negative Winkeländerung eine Bewegung in Richtung Lösen der Bremse bedeutet.

Dies ist jedoch ein relativ messendes Lagemesssystem, das z.B. die Spindelpositionen nur relativ ermittelt, ohne zu wissen, in welcher absoluten Position innerhalb des begrenzten mechanischen Bewegungsbereiches sich die Spindel gegenwärtig befindet.

Es werden daher folgende Schritte, deren Reihenfolge hiermit nicht festegelegt wird, durchgeführt: Festlegen einer zu einer vorbestimmten Aktuatorbezugsposition gehörenden Aktuatorbezugskoordinate, Bestimmen einer Aktuatoristkoordinate nach Maßgabe der Aktuatorbezugskoordinate und nach Maßgabe der Bewegung des Aktuators, Festlegen eines ersten erlaubten Aktuatorbewegungsbereiches aus einer erlaubten Löseendkoordinate des Aktuators zum Lösen der Bremse und einer ersten erlaubten Zuspannendkoordinate des Aktuators zum Zuspannen der Bremse nach Maßgabe der Aktuatorbezugskoordinate und Ausgeben eines Signals, wenn die Aktuatoristkoordinate außerhalb des ersten erlaubten Aktuatorbewegungsbereiches liegt.

Unter Aktuator kann ein sich bewegendes Teil zur Betätigung der Bremse verstanden werden. Dieses können z.B. eine Motorwelle oder eine Spindel sein. Der Aktuator wird vorzugsweise elektrisch angetrieben. Die Aktuatorposition kann dabei sowohl rotatorisch als auch translatorisch erfasst werden, wird aber vorzugsweise rotatorisch z.B. mit einem Hall-Sensor oder einem Resolver relativ erfasst. Die gegebene Aktuatorbezugsposition ist eine feste Position, die der Aktuator definiert anfahren kann. D.h. diese Position ist eine absolute Position innerhalb des Fahrzeugs, vorzugsweise innerhalb der Fahrzeugbremse und kann somit stets wiedergefunden werden.

Zum Finden der Aktuatorbezugsposition kann z.B. ein schaltendes Sensorelement wie z.B. ein Mikro-Schalter oder ein Schalt-Hall-Sensor eingesetzt werden, der die translatorische Position der Spindel erfassen kann. Erreicht der Aktuator die durch das Sensorelement vorgegebene Aktuatorbezugsposition, so gibt er beispielsweise einen Schaltimpuls ab oder schaltet vom logischen Zustand "0" in den logischen Zustand "1". Zum Anfahren dieser Position bewegt sich der Aktuator vorzugsweise mit geringer Geschwindigkeit in Richtung Lösen der Bremse, bis das Sensorelement z.B. durch den Schaltimpuls das Erreichen der Position meldet.

Bei der Durchführung des erfindungsgemäßen Verfahrens wird der mechanische Anschlag des Aktuators an das Motorgehäuse, vorzugsweise in Richtung Lösen der Bremse, als Aktuatorbezugsposition vorgegeben. Zum Anfahren dieser Position kann sich der Aktuator vorzugsweise mit sehr geringer Geschwindigkeit in Richtung Lösen der Bremse bewegen. Während dieser Bewegung wird dann z.B. der den Aktuator antreibende Motorstrom erfasst. Führt der Aktuator gegen das Motorgehäuse, steigt der Motorstrom signifikant an, da in diesem Fall der Motor gegen ein System mit sehr großer Steifigkeit arbeitet. Mit Hilfe dieses Stromanstieges kann das Erreichen der Aktuatorbezugsposition festgestellt und die Bewegung des Aktuators beendet werden.

Bei gegebener Aktuatorbezugsposition kann eine zugehörige Aktuatorbezugskoordinate festgelegt werden. Dieses kann dadurch geschehen, dass einem Zähler, der ebenfalls zur Bestimmung der Aktuatoristkoordinate verwendet wird, ein Wert zugewiesen wird, der in einem Speicher gespeichert sein kann oder auch von außen eingegeben und danach gespeichert werden kann. Dieses kann auch gleich Null sein, so dass der Zähler z.B. einfach zurückgesetzt oder neu initialisiert wird. Eine andere Möglichkeit zur Festlegung der Aktuatorbezugskoordinate besteht darin, den bei Erreichen der Aktuatorbezugsposition im Zähler befindlichen Wert als Aktuatorbezugskoordinate abzuspeichern. Bei der Festlegung der Aktuatorbezugskoordinate ist bei Bedarf darauf zu achten, dass, je nach Lage der Aktuatorbezugsposition, der Zähler von der Bezugskoordinate ausgehend in der Lage ist, aufwärts und abwärts zu zählen und verwertbare Werte erzeugt.

Weiterhin kann ein erster erlaubter Aktuatorbewegungsbereich festgelegt werden, innerhalb dessen sich der Aktuator bewegen darf. Dieser erlaubte Bewegungsbereich kann sich auf die Position des Aktuators oder auf die zugehörige Koordinate beziehen, da sich die eine aus der anderen ermitteln läßt. Dieser erste Aktuatorbewegungsbereich wird von zwei erlaubten Koordinaten eingegrenzt, nämlich in Richtung Lösen der Bremse von einer erlaubten Löseendkoordinate und in Richtung Zuspannen der Bremse von einer ersten erlaubten Zuspannendkoordinate, wobei die jeweiligen Endkoordinaten zu entsprechenden Aktuatorendpositionen gehören. Die Festlegung des ersten erlaubten Aktuatorbewegungsbereiches erfolgt nach Maßgabe der Aktuatorbezugskoordinate und damit auch nach Maßgabe der Aktuatorbezugsposition. Somit wird ein Bewegungsbereich festgelegt, der einen absoluten Bezug zur Aktuatorbezugsposition hat.

Die zuvor beschriebenen Verfahrensschritte können bei einer Betriebsbremse jeweils beim Neustart eines Fahrzeugs einmal durchgeführt werden. Die entsprechenden Koordinaten können abgespeichert und jederzeit wieder abgerufen werden. Bei einer Feststellbremse können diese Schritte durchgeführt werden, wenn die Bremse gelöst ist, was dann auch während der Fahrt des Fahrzeugs möglich sein muß. Diese kann z.B. nach dem ersten Lösen der Bremse nach Fahrtbeginn erfolgen. Diese Schritte können zur Sicherheit auch mehrmals während eines fortgesetzten Betriebes des Fahrzeuges durchgeführt werden, um zu überprüfen, ob die ermittelten Koordinaten auch weiterhin mit den zugehörigen Positionen übereinstimmen. So kann z.B. die Aktuatorbezugsposition angefahren werden und dort die Aktuatoristposition mit der Aktuatorbezugskoordinate verglichen werden. Eine Korrektur kann evtl. aufgrund von fehlerhaften Sensorimpulsen oder einer fehlerhaften Übertragung dieser (z.B. zuviele oder zuwenig Impulse) notwendig sein.

Die eigentliche Überwachung der Bewegung des Aktuators kann dadurch erfolgen, daß fortlaufend eine Aktuatoristkoordinate in Abhängigkeit von der Bewegung des Aktuators bestimmt wird. Die Aktuatoristkoordinate und/oder die Aktuatorbewegungsrichtung kann unter verwendung eines relativ messenden, inkrementellen Lagemeßsystems bestimmt bzw. erkannt werden. Dieses kann dadurch erfolgen, daß der Zähler von der Aktuatorbezugskoordinate ausgehend die Impulse eines geeignet angebrachten Hall-Sensors aufwärts oder abwärts zählt, je nach Bewegungsrichtung des Aktuators. Die Bewegungsrichtung kann dabei z.B. unter Verwendung eines geeignet angebrachten zweiten Hall-Sensors erkannt werden.

Die aktuelle Aktuatoristkoordinate kann dann mit der erlaubten Löseendkoordinate und der ersten erlaubten Zuspannendkoordinate ggf. unter Beachtung der Bewegungsrichtung des Aktuators verglichen werden, um festzustellen, ob die Aktuatoristkoordinate außerhalb des ersten erlaubten Aktuatorbewegungsbereiches liegt. Ist dieses der Fall, wird ein entsprechendes Signal ausgegeben.

Das Signal kann dazu verwendet werden, eine Warnung an den Fahrer auszugeben. Überschreitet die Aktuatoristkoordinate in Richtung Lösen den ersten erlaubten Aktuatorbewegungsbereich, so kann dieses als eine Fehlfunktion des Motors angesehen werden, da dann z.B. die Gefahr bestehen könnte, daß die Spindel gegen das Motorgehäuse fährt. Um dieses zu verhindern, kann zusätzlich zur Ausgabe der Warnung die Aktuatorlösebewegung angehalten werden. Nach der Beendigung der Lösebewegung des Aktuators sind mehrere anschließende Aktionen denkbar, wie zum Beispiel ein Neuinitialisieren oder Abschalten der Bremse etc..

Überschreitet die Aktuatoristkoordinate in Richtung Zuspannen den ersten erlaubten Aktuatorbewegungsbereich, kann ebenfalls eine Warnung an den Fahrer abgegeben werden, die zum Beispiel mitteilen kann, daß der Bremsbelag ausgewechselt werden sollte.

Vorzugsweise werden die erlaubte Löseendkoordinate und die erste erlaubte Zuspannendkoordinate in Bezug auf den maximal möglichen, mechanischen Aktuatorbewegungsbereich festgelegt, d.h. sie können so festgelegt sein, daß die Spindel in Richtung Lösen nicht gegen den mechanischen Anschlag fährt und in Richtung Zuspannen nicht soweit fährt, daß im Extremfall z.B. das Metall der Bremsbacke auf das Metall der Bremsscheibe oder Bremstrommel zu liegen kommt, wenn kein Bremsbelag mehr vorhanden ist. Außerdem können entsprechende Sicherheitsabstände berücksichtigt werden.

Verschiedene Ausführungsformen der Erfindung werden nun anhand der in den schematischen Zeichnungen dargestellten Ausführungsbeispiele näher erläutert. Dabei zeigen:
- Fig. 1: ein Blockschaltbild einer Ausführungsform der erfindungsgemäßen Vorrichtung,
- Fig. 2: beispielhafte Bremsbetätigungskraftverläufe bei unterschiedlichem Bremsbelagverschleiß,
- Fig. 3: ein Flußdiagramm einer Ausführungsform des erfindungsgemäßen Verfahrens und
- Fig. 4: ein Flußdiagramm einer anderen Ausführungsform des erfindungsgemäßen Verfahrens.

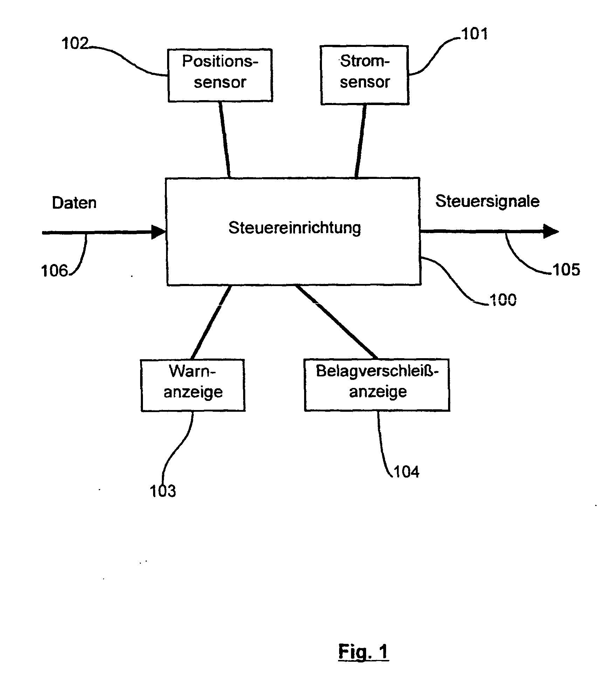

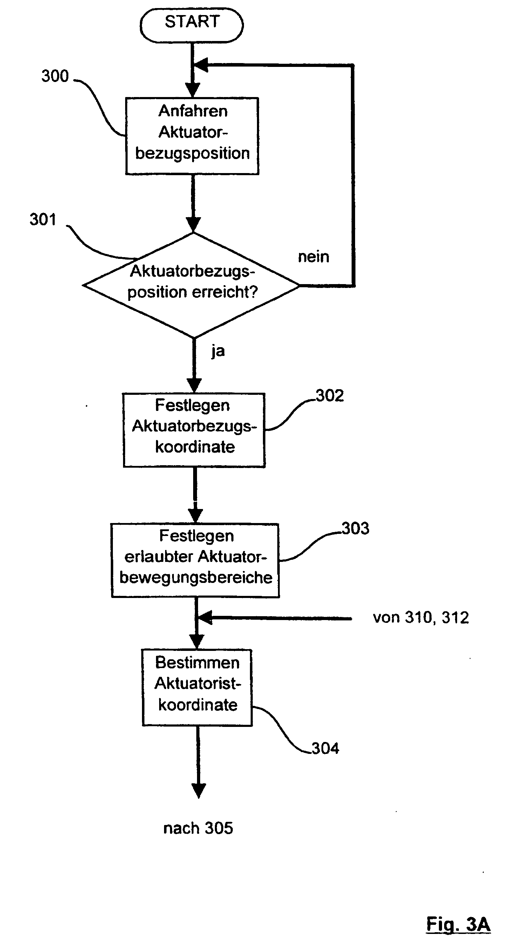

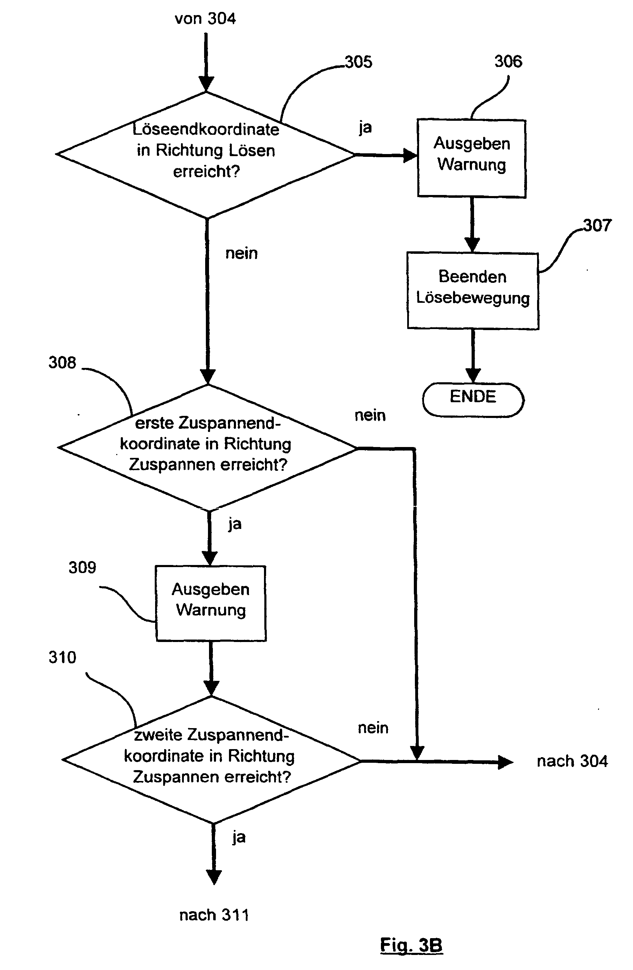

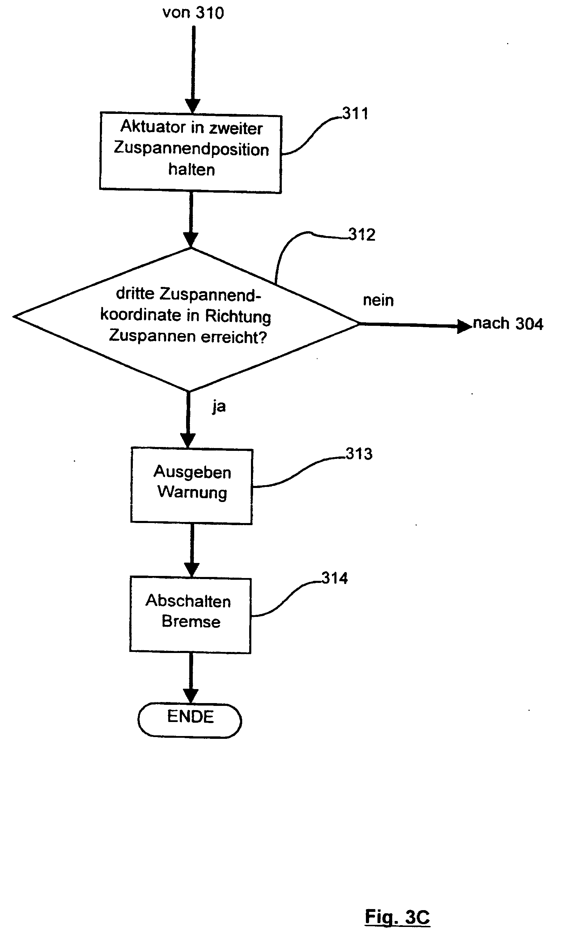

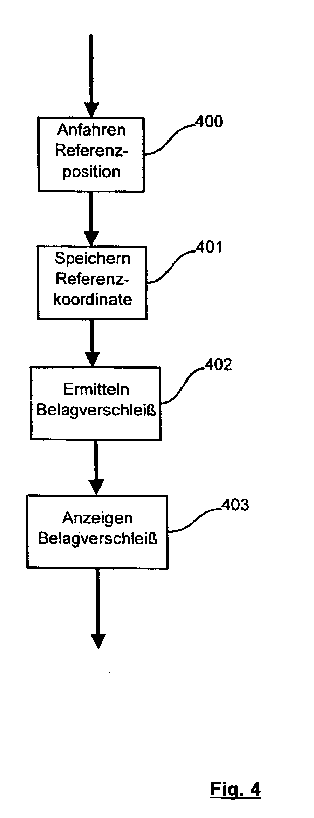

Figur 1 zeigt beispielhaft eine Ausführungsform einer erfindungsgemäßen Steuereinrichtung 100, die z.B. ein Mikroprozessor sein kann und die zur Durchführung der Schritte in den Fig. 3 und 4 ausgelegt sein kann. Sie weist einen Eingang 106 z.B. zur Dateneingabe auf. Hierüber kann die Aktuatorbezugskoordinate eingegeben werden, die bei Erreichen der Aktuatorbezugsposition durch den Aktuator einem in der Steuereinrichtung 100 enthaltenen Zähler zugewiesen werden kann. Außerdem können hier die maximal möglichen, mechanischen Endpositionen des maximal möglichen, mechanischen Bewegungsbereiches in Bezug auf die Aktuatorbezugsposition eingegeben werden, woraus wiederum die Endkoordinaten ermittelt werden können. Außerdem können über den Eingang 106 Signale anderer Einrichtungen zur verarbeitung in der Steuereinrichtung 100 eingegeben werden.

Die Steuereinrichtung 100 steuert beispielsweise die Aktuatorbewegung. Hierfür gibt sie Steuersignale über den Ausgang 105 aus. Sie ist mit einem Stromsensor 101 verbunden, der den Motorstrom erfaßt, der zum Antreiben des Aktuators verwendet wird. Hat der Aktuator zum Beispiel die Aktuatorbezugsposition, d.h. den mechanischen Anschlag der Spindel an das Motorgehäuse erreicht, so meldet der Stromsensor 101 einen signifikanten Stromanstieg an die Steuereinrichtung 100. Diese weiß dann, daß der Aktuator die Bezugsposition erreicht hat und kann dann die entsprechende Aktuatorbezugskoordinate, die z.B. über den Eingang 106 eingegeben wurde, dem Zähler zuweisen.

Während der Bewegung des Aktuators gibt ein Positionssensor 102 Impulse an die Steuereinrichtung 100 weiter, die der Zähler zum Zählen verwendet. Dabei kann entweder der Positionssensor 102 eine Information über die Bewegungsrichtung des Aktuators liefern, oder aber die Steuereinrichtung 100 kann diese Information anderweitig erhalten.

Weiterhin legt die Steuereinrichtung 100 den ersten erlaubten Aktuatorbewegungsbereich in Bezug auf die Aktuatorbezugskoordinate z.B. unter Verwendung von den eingegebenen Endpositionen fest. Dabei können die erlaubte Löseendkoordinate und die erste erlaubte Zuspannendkoordinate in einem Speicher innerhalb der Steuereinrichtung 100 abgelegt werden, damit sie jederzeit abgerufen werden können. Es ist jedoch auch denkbar, daß, wenn die Aktuatorbezugskoordinate über den Eingang 106 eingegeben wird, auch die bereits zuvor festgelegten Endkoordinaten über diesen Eingang 106 einzugeben. Dieses könnte einmalig bei der Initialisierung geschehen, und bräuchte dann nicht mehr wiederholt zu werden. Diese Möglichkeit bietet sich z.B. dann an, wenn der Aktuatorbewegungsbereich in Abhängigkeit von dem mechanisch möglichen Bewegungsbereich des Aktuators festgelegt wird, da dann bereits im voraus die Aktuatorbezugsposition und der mechanische Bewegungsbereich bekannt sind. Dann können bereits im voraus einmalig die Aktuatorbezugskoordinate und die Endkoordinaten ermittelt werden.

In der Steuereinrichtung 100 kann eine Vergleichseinrichtung vorgesehen sein, die die Aktuatoristkoordinate jeweils mit der Löseendkoordinate und der ersten Zuspannendkoordinate und ggf. weiteren Koordinaten vergleicht, woraufhin die Steuereinrichtung 100 z.B. feststellen kann, ob die Aktuatoristkoordinate außerhalb des ersten erlaubten Aktuatorbewegungsbereiches liegt. Ist dieses der Fall, gibt die Steuereinrichtung ein entsprechendes Signal aus. Dieses Signal kann zum einen der Warnanzeige 103, die auditiv und/oder visuell und/oder auch haptisch warnen kann, und zum anderen der Belagverschleißanzeige 104 in Abhängigkeit von dem Vergleich zwischen der Aktuatoristkoordinate und dem ersten erlaubten Aktuatorbewegungsbereich zugeführt werden. Die Warnanzeige kann dabei in einzelne Bereiche unterteilt sein, die auf unterschiedliche Signale der Steuereinrichtung reagieren, um dem Fahrer z.B. anzeigen zu können, ob die erste Zuspannendposition oder die Löseendposition bzw. die jeweilige Koordinate erreicht wurde. Das Erreichen weiterer Zuspannendpositionen außerhalb des ersten erlaubten Aktuatorbewegungsbereiches, die auf ähnliche Weise wie die erste Zuspanendposition bzw. koordinate eingegeben oder ermittelt werden können und die später näher beschrieben werden, kann ebenfalls über die Warnanzeige angezeigt werden.

Die Ausgangsstellung (Lüftspielposition) der Bremsbeläge bzw. des Aktuators kann während des Betriebes der Bremse in Abhängigkeit von der Betriebsdauer neu festgelegt werden. Dafür kann eine Position mit dem Aktuator angefahren werden, bei der die Bremsbeläge kraftfrei an der Bremsscheibe und/oder Bremstrommel anliegen. Dieser Aktuatorreferenzposition kann dann eine entsprechende Aktuatorreferenzkoordinate zugewiesen werden. In Abhängigkeit vom Bremsbelagverschleiß kann dann betriebsabhängig eine andere Aktuatorreferenzposition angefahren und entsprechend eine Aktuatorreferenzkoordinate neu angepaßt bzw. zugewiesen werden. Dementsprechend kann aus der Referenzkoordinate der Bremsbelagverschleiß ermittelt werden. Die Steuereinrichtung 100 gibt dann ein entsprechendes Signal an die Belagverschleißanzeige 104 weiter, die dem Fahrer den Bremsbelagverschleiß z.B. auditiv und/oder visuell mitteilt. In Abhängigkeit von der Referenzposition bzw. -koordinate wird dann das Lüftspiel eingestellt.

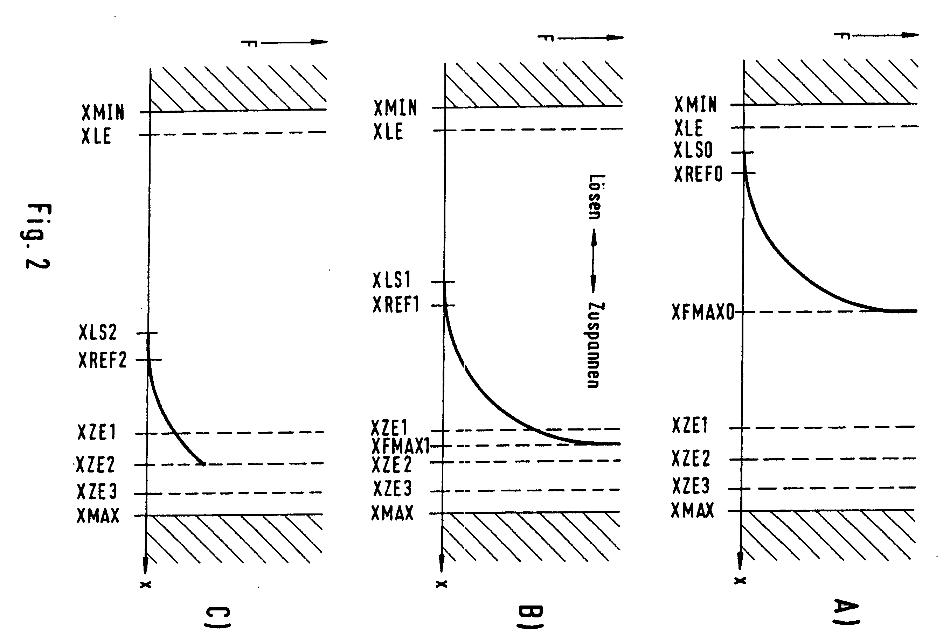

In Figur 2 sind schematisch drei beispielhafte Diagramme mit Verläufen der Bremsbetätigungskraft F in Abhängigkeit von der Position x des Aktuators dargestellt. In jedem Diagramm ist jeweils eine andere Referenzposition dargestellt. In Figur 2A ist dieses die Referenzposition bei neuen, unverschlissenen Bremsbelägen XREF0. Die Minimalposition XMIN links im Diagramm stellt den mechanischen Anschlag des Aktuators in Richtung Lösen dar. Die Maximalposition XMAX rechts im Diagramm stellt die Position dar, bei der z.B. das Metall der Bremsbacke auf das Metall der Bremsscheibe bzw. Bremstrommel zu liegen kommen würde, wenn die Bremsbeläge ganz verschlissen wären. Die Minimal- und Maximalpositionen XMIN und XMAX stellen damit die Grenzen des maximal möglichen, mechanischen Aktuatorbewegungsbereiches dar. Die Position XLE bezeichnet die Löseendposition, die z.B. in Richtung Lösen der Bremse vom Aktuator nicht überschritten werden darf. Die Position XZE1 bezeichnet die erste Zuspannendposition. Die Löseend- und die Zuspannendositionen XLE und XZE1 schließen den ersten erlaubten Aktuatorbewegungsbereich ein, innerhalb dessen sich der Aktuator bewegen darf. Die Position XLS0 stellt die Lüftspielposition der Bremse bei unverschlissenen Bremsbelägen dar. Wird nun die Bremse bis zu einer Maximalkraft betätigt, so ergibt sich der dargestellte Kraftverlauf. Dieser endet in Fig. 2A mit der Maximalkraft bei der Maximalkraftposition XFMAX0. Der Bereich zwischen der Referenzposition XREF0 und der Maximalkraftposition XFMAX0 stellt den Arbeitsbereich der Bremse dar, d.h. den Bereich, in dem sich die Bremsbeläge zusammendrücken können.

In Figur 2B ist eine Referenzposition XREF1 dargestellt, bei der die Bremsbeläge soweit verschlissen sind, daß sie ausgetauscht werden sollten. Dieses zeigt sich darin, daß der Aktuator bei maximaler Bremsbetätigungskraft die erste Zuspannendposition XZE1 überschreitet. In dieser Ausführungsform wird bei Erreichen der ersten Zuspannendposition XZE1 eine Warnung an den Fahrer ausgegeben. Wie an dem Kraftverlauf zu sehen ist, ist jedoch weiterhin ein normales Bremsen möglich.

In der Figur 2C sind die Bremsbeläge jedoch soweit verschlissen, daß der Aktuator eine zweite Zuspannendposition XZE2 erreicht, die nicht überschritten werden darf. Um jedoch zumindest ein leichtes Bremsen mit dieser Bremse weiterhin zu ermöglichen, wird der Aktuator in dieser Zuspannendposition XZE2 gehalten, wodurch die maximal mögliche Bremsbetätigungskraft F nicht mehr erreicht wird. Dabei ist es möglich, daß, wenn das Verfahren auf beide Räder einer Achse angewandt wird, die Bremskraft bei unterschiedlich verschlissenen Bremsbelägen unterschiedlich auf die beiden Räder verteilt ist. Dann kann die Steuereinrichtung 100 dazu ausgelegt sein, die Bremskraftverteilung der beiden Räder entsprechend so zu steuern, daß das Fahrzeug nicht von seiner Spur abweicht. Dabei ist es möglich, daß die Bremse zum Beispiel durch eine weitere hydraulische Bremse unterstützt wird. Eine bei Erreichen der ersten Zuspannendposition XZE1 eingeleitete Warnung kann dann entsprechend modifiziert werden, um das Erreichen der zweiten Zuspannendposition XZE2 anzuzeigen. Bei Nachlassen der Bremsbetätigungskraft kann dann auch der Aktuator entsprechend wieder in Richtung Lösen bewegt werden, wobei die Warnung weiterhin angezeigt und möglicherweise auch bei einem Neustart des Fahrzeug wieder angezeigt werden kann.

Die in den Diagrammen dargestellte dritte Zuspannendposition XZE3, die rechts von der zweiten Zuspannendposition XZE2 liegt oder in einer anderen Ausführungsform auch gleich dieser sein kann, stellt diejenige Aktuatorposition dar, bei der die Bremse beipsielsweise gleichzeitig mit der Ausgabe einer Warnung abgeschaltet wird, da der Aktuator z.B. aufgrund einer Fehlfunktion diese Position erreicht hat. Die zweite und dritte Zuspannendpositionen XZE2, XZE3 werden dabei ebenso wie die Löseendposition XLE und die erste Zuspannendposition XZE1 vorzugsweise nach Maßgabe des maximal möglichen, mechanischen Aktuatorbewegungsbereiches festgelegt.

Die Diagramme der Figur 2 sind nur schematisch und zeigen nur eine Ausführungsform unter mehreren. Die Referenzposition bei unverschlissenen Belägen XREF0 kann zum Beispiel als Austauschposition angefahren werden, um einen Bremsbelag zu wechseln. Eine andere geeignete Position ist jedoch auch denkbar. Die entsprechende Aktuatoraustausch-koordinate kann dann z.B. in der Steuereinrichtung 100 ermittelt und abgespeichert werden. Die dargestellten Diagramme können ebenso als eine Darstellung der Kraftver-läufe in Abbhängigkeit von den entsprechenden Koordinaten angesehen werden. Dann wären die dargestellen Größen x usw. als Koordinaten oder Zählerwerte zu betrachten.

Figur 3 zeigt beispielhaft den Ablauf einer Ausführungsform des erfindungsgemäßen Verfahrens, bei dem zunächst im Schritt 300 die Aktuatorposition angefahren wird. Im Schritt 301 erfolgt die Abfrage, ob die Aktuatorbezugsposition bereits erreicht ist. Ist dieses nicht der Fall, wird weiterhin die Aktuatorbezugsposition im Schritt 300 angefahren. Ist die Aktuatorbezugsposition erreicht, wird im Schritt 302 die zugehörige Aktuatorbezugskoordinate festgelegt. Danach erfolgt im Schritt 303 das Festlegen der erlaubten Aktuatorbewegungsbereiche inclusive der Löseendposition und der ersten bis dritten Zuspannend-positionen. Für den eigentlichen Betrieb der Bremse kann nun die Aktuatoristkoordinate entsprechend der aktuellen Position des Aktuators bestimmt werden.

Danach erfolgt der Schritt 305 in der Figur 3B, bei dem abgefragt wird, ob die Löseendkoordinate in Richtung Lösen von der Aktuatoristkoordinate erreicht wurde. Ist dieses der Fall, wird im Schritt 306 eine entsprechende Warnung ausgegeben und im Schritt 307 die Lösebewegung des Aktuators beeendet. Ist die Löseendkoordinate nicht erreicht, wird im Schritt 308 abgefragt, ob die erste Zuspannendkoordinate in Richtung Zuspannen von der Aktuatoristkoordinate erreicht wurde. Ist dieses nicht der Fall, wird das Verfahren im Schritt 304 fortgeführt. Wird die Abfrage bejaht, wird im Schritt 309 eine entsprechende Warnung ausgegeben und danach im Schritt 310 abgefragt, ob auch die zweite Zuspannendkoordinate in Richtung Zuspannen von der Aktuatoristkoordinate erreicht wurde. Ist dieses nicht der Fall, wird das verfahren im Schritt 304 fortgesetzt.

Wird die Abfrage im Schritt 310 der Fig. 3B bejaht, wird das Verfahren im Schritt 311 der Figur 3C fortgesetzt. Dort wird der Aktuator in der zweiten Zuspannendposition gehalten und im Schritt 312 abgefragt, ob die Aktuatoristkoordinate entgegen dem Schritt 311 die dritte Zuspannendkoordinate in Richtung Zuspannen erreicht hat. Ist dieses nicht der Fall, wird das Verfahren im Schritt 304 fortgesetzt. Wird die Abfrage bejaht, wird eine entsprechende Warnung im Schritt 313 ausgegeben und im Schritt 314 die Bremse abschaltet und das Verfahren beendet. Danach könnte zum Beispiel eine übergeordnete Steuerung wie eine ESP-Steuerung den weiteren Bremsvorgang übernehmen.

In Figur 4 sind Schritte zur Ermittlung und Anzeige des Belagverschleisses aufgeführt. Dabei wird im Schritt 400 die Aktuatorreferenzposition angefahren. Danach wird im Schritt 401 die zugehörige Referenzkoordinate abgespeichert. Dieses schließt ein vorheriges Bestimmen der Referenzkoordinate mit der Aktuatoristkoordinate ein. Darauffolgend wird im Schritt 402 der Belagverschleiß in Abhängigkeit von der Referenzkoordinate ermittelt. Im Schritt 403 wird der Belagverschleiß oder eine entsprechende Größe dem Fahrer angezeigt bzw. auditiv und/oder visuell mitgeteilt.

Die in Figur 4 dargestellten Schritte können an verschiedenen Stellen der Figur 3 durchgeführt werden. Dieses sollte jedoch bei gelöster Bremse erfolgen, damit der Bremsvorgang nicht unterbrochen wird. Außerdem können die Schritte der Figur 4 nach Bedarf wiederholt werden, und es kann das Einstellen des Lüftspiels direkt anschließen, damit die Bremse eine korrekte Ausgangsposition einnehmen kann. Die Durchführung könnte zum Beispiel so geschehen, daß bei Eintreffen einer oder mehrerer Bedingungen die Verfahrens-schritte 400 bis 403 vor dem Schritt 304 in Figur 3A durchgeführt werden.

Zum Auswechseln eines Bremsbelages kann beispielsweise im Fahrzeuginnenraum ein Bedienelement (z.B. ein Schalter) vorgesehen sein, den der Fahrer betätigen kann. Danach wird automatisch der Aktuator in die Austauschposition gefahren. Nach Beendigung des Belagwechsels kann dieser Schalter erneut betätigt oder wieder gelöst werden, was dann beispielsweise eine erneute Initialisierung der Referenzposition bzw. Bestimmung der Referenzkoordinate zur Folge haben kann. Danach kann der Aktuator die Lüftspielposition einnehmen, wodurch die Bremse wieder betriebsbereit wäre.

## Patentansprüche

1. Verfahren zur Überwachung der Bewegung eines Aktuators einer Fahrzeugbremse, das folgende Schritte aufweist:
- Festlegen einer zu einer vorbestimmten Aktuatorbezugsposition gehörenden Aktuatorbezugskoordinate (XLS0, XLS1, XLS2),
- Bestimmen einer Aktuatoristkoordinate (X) nach Maßgabe der Aktuatorbezugskoordinate (XLS0, XLS1, XLS2) beim Erkennen der Aktuatorbewegungsrichtung und nach Maßgabe der Bewegung des Aktuators,
- Festlegen eines ersten erlaubten Aktuatorbewegungsbereiches aus einer erlaubten Löseendkoordinate (XLE) des Aktuators zum Lösen der Bremse und einer ersten erlaubten Zuspannendkoordinate (XZE) des Aktuators zum Zuspannen der Bremse nach Maßgabe der Aktuatorbezugskoordinate (XLS0, XLS1, XLS2) und
- Ausgeben eines Signals, wenn die Aktuatoristkoordinate (X) außerhalb des ersten erlaubten Aktuatorbewegungsbereiches liegt,
- wobei eine Warnung an den Fahrer ausgegeben wird, wenn ein Signal ausgegeben wird, weil die Aktuatoristkoordinate (X) in Richtung Zuspannnen die erste Zuspannendkoordinate (XZE) überschreitet,
**dadurch gekennzeichnet, dass** der Schritt des Festlegens der Aktuatorbezugskoordinate (XLS0, XLS1, XLS2) ein Erfassen eines den Aktuator antreibenden Motorstromes zum Erkennen des Erreichens der Aktuatorbezugsposition durch den Aktuator beinhaltet und dass die Aktuatoristkoordinate (X) und/oder die Aktuatorbewegungsrichtung unter Verwendung eines relativ messenden, inkrementellen Lagemeßsystems (102) bestimmt bzw. erkannt werden.

2. Verfahren nach Anspruch 1, **dadurch gekennzeichnet, dass** eine Warnung an den Fahrer ausgegeben wird und/oder die Aktuatorlösebewegung abgebrochen wird, wenn ein Signal ausgegeben wird, weil die Aktuatoristkoordinate (X) in Richtung Lösen die Löseendkoordinate (XLE) überschreitet.

3. Verfahren nach Anspruche 1 oder 2, **dadurch gekennzeichnet, dass** der Aktuator elektrisch angetrieben wird.

4. Verfahren nach einem der Ansprüche 1 bis 3, **dadurch gekennzeichnet, dass** der Schritt des Festlegens der Aktuatorbezugskoordinate (XLS0, XLS1, XLS2) ein Anfahren der Aktuatorbezugsposition mit dem Aktuator und ein Erkennen des Erreichens der Aktuatorbezugsposition durch den Aktuator beinhaltet.

5. Verfahren nach Anspruch 4, **dadurch gekennzeichnet, dass** die Aktuatorbezugsposition durch die Position eines schaltenden Sensors vorgegeben ist, der ein entsprechendes Schaltsignal zum Erkennen des Erreichens der Aktuatorbezugsposition abgibt, wenn der Aktuator diese Position erreicht hat.

6. Verfahren nach einem der Ansprüche 1 bis 5, **dadurch gekennzeichnet, dass** die absolute Bezugsposition durch eine (XMIN) der Grenzen des maximal möglichen, mechanischen Aktuatorbewegungsbereiches, vorzugsweise derjenigen in Richtung Lösen vorgegeben ist.

7. Verfahren nach einem der Ansprüche 1 bis 6, **dadurch gekennzeichnet, dass** betriebsabhängig wiederholt nach Maßgabe der Aktuatorbezugskoordinate (XLS0, XLS1, XLS2) eine Aktuatorreferenzkoordinate (XREF0, XREF1, XREF2) für eine Aktuatorposition bestimmt wird, bei der die Bremsbeläge kraftfrei an der Bremsscheibe und/oder Bremstrommel anliegen.

8. Verfahren nach Anspruch 7, **dadurch gekennzeichnet, dass** der Bremsbelagverschleiß nach Maßgabe der Aktuatorreferenzkoordinate (XREF0, XREF1, XREF2) ermittelt wird.

9. Verfahren nach Anspruch 8, **dadurch gekennzeichnet, dass** eine dem Bremsbelagverschleiß entsprechende Größe dem Fahrer auditiv und/oder visuell mitgeteilt wird.

10. Verfahren nach zumindest einem der Ansprüche 7 bis 9, **dadurch gekennzeichnet, dass** das Belaglüftspiel nach Maßgabe der Aktuatorreferenzkoordinate (XREF0, XREF1, XREF2) eingestellt wird.

11. Verfahren nach einem der Ansprüche 7 bis 10, bei dem eine Aktuatoraustauschkoordinate nach Maßgabe der entsprechenden, bei unverschlissenen Bremsbelägen bestimmten Aktuatorreferenzkoordinate ermittelt wird, und die zugehörige Aktuatoraustauschposition angefahren wird, wenn ein Bremsbelag ausgetauscht werden soll.

12. Verfahren nach einem der Ansprüche 1 bis 11, **dadurch gekennzeichnet, dass** ein zweiter erlaubter Aktuatorbewegungsbereich aus der erlaubten Löseendkoordinate (XLE) und einer zweiten erlaubten Zuspannendkoordinate (XZE2) festgelegt wird, wobei der erste Aktuatorbewegungsbereich innerhalb des zweiten Aktuatorbewegungsbereiches liegt oder gleich diesem ist.

13. Verfahren nach Anspruch 10, **dadurch gekennzeichnet, dass** der erste und/oder zweite erlaubte Aktuatorbewegungsbereich nach Maßgabe des maximal möglichen, mechanischen Aktuatorbewegungsbereiches festgelegt wird.

14. Verfahren nach Anspruch 12 oder 13, **dadurch gekennzeichnet, dass**, wenn die Aktuatoristkoordinate (X) in Richtung Zuspannen die zweite Zuspannendkoordinate (XZE2) erreicht, der Aktuator solange in der zugehörigen Zuspannendposition gehalten wird, bis die Bremsung gelöst wird.

15. Verfahren nach einem der Ansprüche 12 bis 14, **dadurch gekennzeichnet, dass** die Bremse abgeschaltet und/oder eine Warnung ausgegeben wird, wenn die Aktuatoristkoordinate (X) in Richtung Zuspannen eine dritte Zuspannendkoordinate (XZE3) erreicht, die in Richtung Zuspannen außerhalb des zweiten Aktuatorbewegungsbereiches liegt oder gleich der zweiten Zuspannendkoordinate (XZE2) ist.

16. Verfahren nach einem der Ansprüche 14 oder 15, **dadurch gekennzeichnet, dass**, wenn das Verfahren auf zwei Radbremsen derselben Achse gleichzeitig angewendet wird, die Bremskraftverteilung der beiden Räder so gesteuert wird, dass das Fahrzeug nicht von seiner Spur abweicht.

## Claims

1. Method of monitoring the motion of an actuator of a vehicle brake, which includes the following steps:
- establishing an actuator reference coordinate (XLS0, XLS1, XLS2) related to a predetermined actuator reference position,
- determining an actuator actual coordinate (X) in accordance with the actuator reference coordinate (XLS0, XLS1, XLS2) upon detection of the actuator's direction of motion and in accordance with the motion of the actuator,
- establishing a first permitted actuator motion range from a permitted release end coordinate (XLE) of the actuator for releasing the brake and a first permitted brake application end coordinate (XZE) of the actuator for application of the brake in accordance with the actuator reference coordinate (XLS0, XLS1, XLS2), and
- outputting a signal when the actuator actual coordinate (X) lies outside the first permitted actuator motion range,
- wherein an alarm is output to the driver when a signal is output because the actuator actual coordinate (X) in the direction of application exceeds the first brake application end coordinate (XZE),
**characterized in that** the step of establishing the actuator reference coordinate (XLS0, XLS1, XLS2) comprises detection of an engine current that drives the actuator in order to detect that the actuator has reached the actuator reference position, and **in that** the actuator actual coordinate (X) and/or the direction of movement of the actuator are determined or detected by using an incremental position measuring system (102) with relative measurement.

2. Method as claimed in claim 1,
**characterized in that** an alarm is output to the driver and/or the actuator release movement is discontinued when a signal is output because the actuator actual coordinate (X) exceeds the release end coordinate (XLE) in the direction of release.

3. Method as claimed in claim 1 or 2,
**characterized in that** the actuator is driven electrically.

4. Method as claimed in at least any one of claims 1 to 3,
**characterized in that** the step of establishing the actuator reference coordinate (XLS0, XLS1, XLS2) includes the actuator moving to adopt the actuator reference position and identifying that the actuator reference position is reached by the actuator.

5. Method as claimed in claim 4,
**characterized in that** the actuator reference position is predetermined by the position of a switching sensor which outputs a corresponding switch signal for detecting that the actuator reference position is reached when the actuator has reached this position.

6. Method as claimed in at least any one of claims 1 to 5,
**characterized in that** the absolute reference position is predetermined by one (XMIN) of the limits of the maximum possible mechanical actuator motion range, preferably that one in the direction of release.

7. Method as claimed in any one of claims 1 to 6,
**characterized in that**, depending on the operation, in accordance with the actuator reference coordinate (XLS0, XLS1, XLS2), an actuator reference coordinate (XREF0, XREF1, XREF2) is determined repeatedly for an actuator position in which the brake linings bear against the brake disc and/or the brake drum in a force-free manner.

8. Method as claimed in claim 7,
**characterized in that** the brake lining wear is determined in accordance with the actuator reference coordinate (XREF0, XREF1, XREF2).

9. Method as claimed in claim 8,
**characterized in that** a quantity corresponding to the brake lining wear is advised to the driver auditively and/or visually.

10. Method as claimed in at least any one of claims 7 to 9,
**characterized in that** the lining clearance is adjusted in accordance with the actuator reference coordinate (XREF0, XREF1, XREF2).

11. Method as claimed in at least any one of claims 7 to 10,
wherein an actuator exchange coordinate is established in accordance with the corresponding actuator reference coordinate which is determined when the brake linings are not worn, and the associated actuator exchange position is assumed when a brake lining shall be replaced.

12. Method as claimed in any one of claims 1 to 11,
**characterized in that** a second permitted actuator motion range is established from the permitted release end coordinate (XLE) and a second permitted brake application end coordinate (XZE2), and the first actuator motion range lies within the second actuator motion range or is equal to it.

13. Method as claimed in claim 10,
**characterized in that** the first and/or the second permitted actuator motion range is established in accordance with the maximum possible mechanical actuator motion range.

14. Method as claimed in claim 12 or 13,
**characterized in that** when the actuator actual coordinate (X) in the direction of brake application reaches the second brake application end coordinate (XZE2), the actuator is retained in the associated brake application end position until the brake is released.

15. Method as claimed in any one of claims 12 to 14,
**characterized in that** the brake is deactivated and/or an alarm is triggered when the actuator actual coordinate (X) in the direction of brake application reaches a third brake application end coordinate (XZE3) which, in the direction of brake application, lies outside the second actuator motion range or is equal to the second brake application end coordinate (XZE2).

16. Method as claimed in any one of claims 14 or 15,
**characterized in that** when the method is applied simultaneously to two wheel brakes of the same axle, the brake force distribution of the two wheels is so controlled that the vehicle does not deviate from its track.

## Revendications

1. Procédé pour contrôler le déplacement d'un actionneur d'un frein de véhicule automobile, qui comprend les étapes suivantes consistant à :
- fixer une coordonnée de référence (XLS0, XLS1, XLS2) de l'actionneur, associée à une position de référence prédéterminée de l'actionneur,
- déterminer une coordonnée réelle (X) de l'actionneur en fonction de la coordonnée de référence (XLS0, XLS1, XLS2) de l'actionneur lors de l'identification du dispositif de déplacement de l'actionneur et en fonction du déplacement de l'actionneur,
- fixer une première plage de déplacement autorisée de l'actionneur à partir d'une coordonnée finale autorisée de déclenchement (XLE) de l'actionneur pour desserrer le frein et une première coordonnée finale autorisée de serrage (XZE) de l'actionneur pour le serrage du frein en fonction de la coordonnée de référence (XLS0, XLS1, XLS2) de l'actionneur, et
- délivrer un signal lorsque la coordonnée réelle (X) de l'actionneur est située à l'extérieur de la première plage autorisée de déplacement de l'actionneur,
- un avertissement étant délivré au conducteur lorsqu'un signal est délivré étant donné que la coordonnée réelle (X) de l'actionneur dépasse, dans la direction du serrage, la première coordonnée finale de serrage (XZE),
**caractérisé en ce que** l'étape de fixation des coordonnées de référence (XLS0, XLS1, XLS2) de l'actionneur inclut une détection d'un courant du moteur, qui entraîne l'actionneur, pour l'identification, par l'actionneur, du fait que la position de référence est atteinte, et que la coordonnée réelle (X) de l'actionneur et/ou la direction de déplacement de l'actionneur sont déterminées ou identifiées moyennant l'utilisation d'un système de mesure incrémentale de position (102), qui exécute une mesure relative.

2. Procédé selon la revendication 1, **caractérisé en ce qu'**un avertissement est délivré au conducteur et/ou le déplacement de desserrage de l'actionneur est interrompu lorsqu'un signal est délivré, étant donné que la coordonnée réelle (X) de l'actionneur dépasse, dans le sens du desserrage, la coordonnée finale de desserrage (XLE).

3. Procédé selon la revendication 1 ou 2, **caractérisé en ce que** l'actionneur est entraîné électriquement.

4. Procédé selon l'une des revendications 1 à 3, **caractérisé en ce que** l'étape de fixation de la coordonnée de référence (XLS0, XLS1, XLS2) de l'actionneur inclut une approche de la position de référence de l'actionneur par l'actionneur et une identification, par l'actionneur, du fait que la position de référence de l'actionneur est atteinte.

5. Procédé selon la revendication 4, **caractérisé en ce que** la position de référence de l'actionneur est prédéterminée par la position d'un capteur exécutant une commutation, qui délivre un signal de commutation correspondant pour identifier le fait que la position de référence de l'actionneur est atteinte, lorsque l'actionneur a atteint cette position.

6. Procédé selon l'une des revendications 1 à 5, **caractérisé en ce que** la position de référence absolue est prédéterminée par l'une (XMIN) des limites de la plage maximale possible de déplacement mécanique de l'actionneur, de préférence celle présente dans le sens du desserrage.

7. Procédé selon l'une des revendications 1 à 6, **caractérisé en ce qu'**une coordonnée de référence (XREF0, XREF1, XREF2) de l'actionneur est déterminée de façon répétée, sur la base du fonctionnement, en fonction de la détermination de la coordonnée de référence (XLS0, XLS1, XLS2) de l'actionneur, pour une position de l'actionneur, dans laquelle les garnitures de frein s'appliquent sans force contre le disque de frein et/ou contre le tambour de frein.

8. Procédé selon la revendication 7, **caractérisé en ce que** l'usure des garnitures de frein est déterminée en fonction de la coordonnée de référence (XREF0, XREF1, XREF2) de l'actionneur.

9. Procédé selon la revendication 8, **caractérisé en ce qu'**une grandeur correspondant à l'usure des garnitures de frein est communiquée au conducteur par voie acoustique et/ou visuelle.

10. Procédé selon au moins l'une des revendications 7 à 9, **caractérisé en ce que** le jeu des garnitures est réglé en fonction de la coordonnée de référence (XREF0, XREF1, XREF2) de l'actionneur.

11. Procédé selon l'une des revendications 7 à 10, selon lequel une coordonnée de remplacement de l'actionneur est déterminée en fonction de la coordonnée de référence correspondante de l'actionneur, déterminée dans le cas où les garnitures de frein ne sont pas usées, et qu'on se rapproche de la position associée de remplacement de l'actionneur, lorsqu'une garniture de frein doit être remplacée.

12. Procédé selon l'une des revendications 1 à 11, **caractérisé en ce qu'**une seconde plage autorisée de déplacement de l'actionneur est fixée à partir de la coordonnée finale autorisée de desserrage (XLE) et d'une seconde coordonnée finale autorisée de serrage (XZE2), la première plage de déplacement de l'actionneur étant située à l'intérieur de la seconde plage de déplacement de l'actionneur ou étant égale à cette dernière.

13. Procédé selon la revendication 10, **caractérisé en ce que** la première et/ou la seconde plages d'actionnement autorisé de l'actionneur sont fixées en fonction de la plage maximale possible de déplacement mécanique de l'actionneur.

14. Procédé selon l'une des revendications 12 ou 13, **caractérisé en ce que**, lorsque la coordonnée réelle (X) de l'actionneur atteint, dans le sens du serrage, la seconde coordonnée finale de serrage (XZE2), l'actionneur est maintenu dans la position finale associée de serrage jusqu'à ce que le freinage soit supprimé.

15. Procédé selon l'une des revendications 12 à 14, **caractérisé en ce que** le frein est desserré et/ou un avertissement est délivré lorsque la coordonnée réelle (X) de l'actionneur atteint, dans la direction de serrage, une troisième coordonnée finale de serrage (XZE3), qui est située, dans la direction de serrage, à l'extérieur de la seconde plage de déplacement de l'actionneur ou est égale à la seconde coordonnée finale de serrage (XZE2).

16. Procédé selon l'une des revendications 14 ou 15, **caractérisé en ce que** lorsque le procédé est utilisé simultanément sur deux freins de roues du même essieu, la distribution de la force de serrage des deux roues est commandée de telle sorte que le véhicule ne s'écarte pas de sa trajectoire.
